# EUROPEAN PATENT SPECIFICATION

(11) **EP 1 344 973 B1**
(45) Date of publication and mention of the grant of the patent: **02.11.2006**
(21) Application number: 03001607.5
(22) Date of filing: 24.01.2003
(51) Int. Cl.: F16P 3/14

(54) **Column for a photoelectric barrier provided with muting sensors**
Säule für Lichtgitter mit deaktivierbaren Sensoren
Colonne pour barrière lumineuse munie de capteurs désactivables

(30) Priority: 12.03.2002 IT TO20020049 U
(43) Date of publication of application: 17.09.2003
(73) Proprietor: REER S.p.A., I-10135 Torino (IT)
(72) Inventor: Mirandola, Francesco, 10097 Collegno (IT); Pautasso, Carlo, 10024 Moncalieri (IT)
(74) Representative: Spandonari, Carlo

(56) References cited:
- DE-A- 19 748 480
- DE-U- 20 103 828
- GB-A- 236 473
- US-A- 3 559 941
- US-A- 4 250 498
- US-A- 4 523 683
- US-A- 6 119 317
- US-B1- 6 186 639

## Description

This invention relates to a column for a photoelectric barrier provided with muting sensors.

In the industrial environment, in order to protect workers in service near dangerous tool machines, it is known to shield entrances to unsafe areas by immaterial walls such as the photoelectric barriers as mentioned above. Such barriers project infrared beams across an entry passage to an area encompassing a dangerous machine, and detect any interruption of the beams to generate an alarm signal and stop the machine. Accordingly, a photoelectric barrier comprises a plurality of light emitting diodes (LED), arranged in a diode-holding column located on one side of the passage and generating parallel beams directed to respective photodiodes arranged in a photodiode-holding column, which is located on the other side of the passage. The output signals from the photodiodes are fed to a processing unit which continuously checks them, for magnitude and/or duration, in order to establish if any interruption of the signal has occurred.

However, articles under processing, as well as certain moving parts of the machine, must be allowed to transit through the barrier without triggering the alarm routine and causing a shutdown. Accordingly, such barriers are commonly provided with a so-called muting function, which temporarily and automatically disables the barrier.

The above performance is achieved by means of a photoelectric sensor assembly located near said columns, and usually comprising at least two pairs of light emitters arranged in succession along the path of the pallet on one side of the passage and, on the other side, respective light receivers whose output signals are also fed to the processing unit. The emitters generate beams which intercept the path of the article, so that any interruption of a beam can be interpreted by the processing unit as a muting command for temporarily inhibiting the barrier, in order to allow the pallets to transit. Such sensors, which can be located on both sides of the barrier (T-arrangement) or only on its unsafe side (L-arrangement), can be provided apart from the frame supporting the barrier or integrated in it, in order to compact the structure and prevent misaligning due to incidental collisions, or the like. In this case, it is known to arrange the emitters and receivers inside respective brackets attached at right angle to the columns, usually by welding, at a predetermined height above ground level in order to protect the diodes, photodiodes and sensors from the external environment.

Although such arrangement of the sensors enables the barrier to have a satisfactory degree of safety, it has the main drawback that the muting emitters and receivers are not adjustable for height or slope in respect of the different requirements. For example, the intercepting plane defined by the beams of the muting sensors should be adjustable for height, according to the shape and size of the pallet, as well as inclinable with respect to the ground, so that even unusual pallets, such as those consisting of a plurality of layers of transparent articles separated by opaque sheets (as usual for packing bottles) can be intercepted.

Another drawback of such known barriers provided with muting sensors which are arranged in brackets irremovably attached to the columns, is that they are more encumbering and inconvenient to carry than the barrier provided with independent muting sensors.

US-A-4 523 683 discloses a column provided with vertical tracks along which brackets or holders can be clamped at adjustable heights by means of locking slide assemblies. However, the column is intended for quick insertion of medical equipment, such as trays and monitoring or treatment instruments, and is therefore not suitable as a column for a photoelectric barrier, which must provide a vertical row of light emitters or receivers. Moreover, in the column of US-A-4 523 683 only the height of a bracket can be adjusted, and not its orientation.

Therefore, a main object of the present invention is to provide a photoelectric barrier equipped with integral muting sensors, having the same degree of safety of the known barriers and also provided with means for adjusting the orientation of the muting sensors in respect of the different requirements.

Another object of this invention is to provide a barrier which can be manufactured by adding a number of accessory members to the standard columns, without altering the latter and/or affecting its accuracy.

Also, an object of this invention is to provide a photoelectric barrier whose sensors are effectively insulated in order to be able to perform in wet environment.

A further object of the invention is to provide a barrier which is adaptable to different uses and easier to transport than the known ones provided with integral brackets.

Another object of this invention is to provide a photoelectric barrier which is cheap and easy to manufacture, and which may be manufactured by employing known processes and equipment.

The above-mentioned object and other objects and advantages of the invention, such as will appear from the following description, are achieved by a photoelectric barrier having the features recited in claim 1, while the other claims state other advantageous features of the invention.

This invention will be now described in more detail, with reference to the attached drawings, shown by way of non limiting example, wherein:
Fig. 1 is a perspective view of a photoelectric barrier according to the invention, and of an approaching pallet;
Fig. 2 is a perspective view, to an enlarged scale, of a portion of the barrier of Fig. 1;
Fig. 3 is a front view of the portion of Fig. 2;
Fig. 4 is a side view of the portion of Fig. 2;
Fig. 5 is a top view of the portion of Fig. 2;
Fig. 6 is a perspective, exploded view of the portion of Fig. 2;
Fig. 7 shows a detail, to an enlarged scale, of the portion of Fig. 3.

With reference to the drawings, a photoelectric barrier 10 comprises a plurality of infrared-light emitting diodes (LED), supported on a diode-holding column 12 located on one side of a passage 13 on the perimeter 11 of an unsafe area 25. The LEDs generate parallel beams 14 (usually 2 to 200 beams, depending on the requirements) which are detected by respective photodiodes supported on a photodiode-holding column 16 located on the opposite side of passage 13. The output signals from the photodiodes are fed to a processing unit (not shown) housed inside the columns, which continuously monitors them in order to establish if an interruption of the signal, i.e. an infringement of the barrier, has occurred.

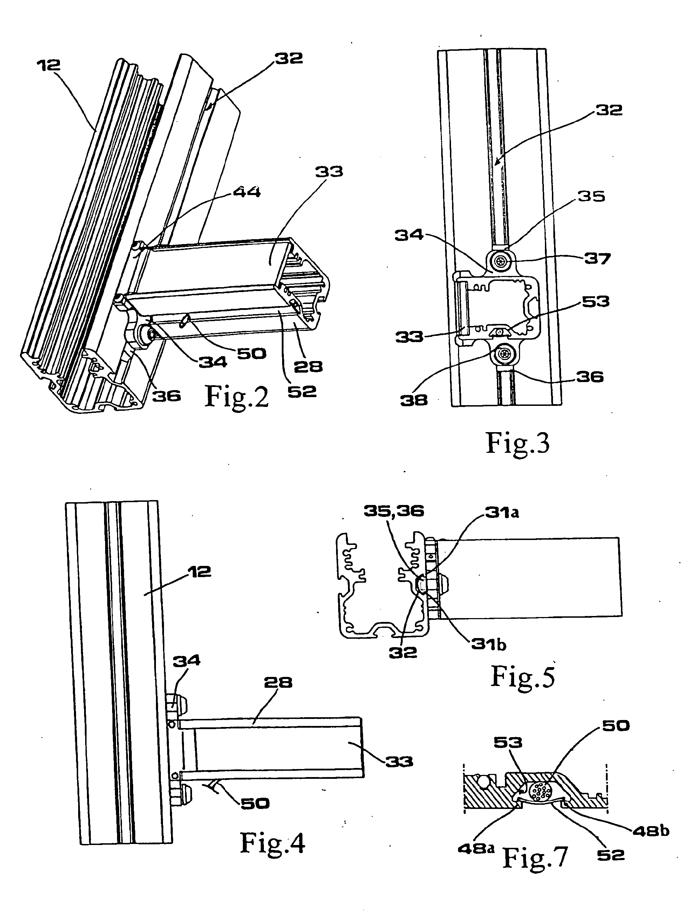

Each column 12, 16 is preferably an U-shaped, extruded aluminum channel, of which a section is shown in detail in Figs. 2 to 6 with reference to column 12. For purposes of attachment, the column is provided with a groove 32, extending along at least one of its lateral surfaces and having internally projecting edges 31a, 31b. The diodes are protected by a semitransparent, longitudinally extending optical window (not shown), e.g. made of PMMA.

Column 16 is structurally identical to column 12, and symmetrically arranged with respect to it, except for its inner electrical components which, however, are outside the scope of the present invention.

Photoelectric barrier 10 is provided with a muting function, whose detecting area is defined by a photoelectric sensor assembly comprising a pair of light emitters, arranged in succession along the path of a pallet 26 on one side of passage 13, and emitting beams 22, 24, which are detected by respective light receivers on the other side of passage 13, and whose output signals are applied to the processing unit. The muting emitters and receivers are housed inside a respective emitter-holding bracket 28 and receiver-holding bracket 29, which are attached at right angle to columns 12, 16, respectively, and project, in the case of an L-arrangement, towards the unsafe area 25.

Figs. 2 to 6 show a portion of one of the above mentioned bracket, and more specifically of emitter-holding bracket 28 that is associated with diode-holding column 12, which bracket also consists of an aluminum channel of the same kind as used for columns 12, 16.

According to the invention, a perforated plate 34 is screwed on one end of emitter-holding bracket 28, and a pair of elongated retaining inserts 35, 36, which engage groove 32, are fastened to perforated plate 34 by means of screws 37, 38. One of the surfaces of the retaining inserts is convex, in order to match with the inside of groove 32. A leaf spring 54, 55 is welded on one side of the convex surface for abutting against the bottom of groove 32, in order to push the retaining insert against edges 31a, 31b and prevent its withdrawal when the bracket is detached. By tightening screws 37, 38, edges 31a, 31b are clamped between perforated plate 34 and the retaining inserts, and the bracket can be fastened to column 12 at a desired longitudinal position. By loosing the screws, bracket 28 may be driven along groove 32 to adjust its height above ground level as desired, e.g. depending on the shape and size of pallet 26.

A system is also provided for adjusting the rotation angle of brackets 28, 29 about an axis which is substantially at right angle to the respective column 12, 16, so that the intercepting plane defined by the beams of the muting sensors can be inclined to intercept unusual pallets, such as those consisting of a plurality of layers of transparent articles, e.g. bottles, separated by opaque sheets. To this purpose, one of slots 39, 40 engaged by screws 37, 38, (slot 39 in the example), is elongated and curved, so that bracket 28 can be turned and adjusted around the axis of the other screw 38 and then secured when the optimum inclination has been found. Slots 39, 40 are made on respective tabs projecting from plate 34, the length of elongated slot 39 being chosen according to the overall rotation angle desired for bracket 28.

Plate 34 has a peripheral recess 43 housing the end portion of optical window 33. A tongue 44 is screwed on the edge of plate 34 and is creased to form a groove 45 to receive a gasket 46 in coincidence with the contact surface of window 33.

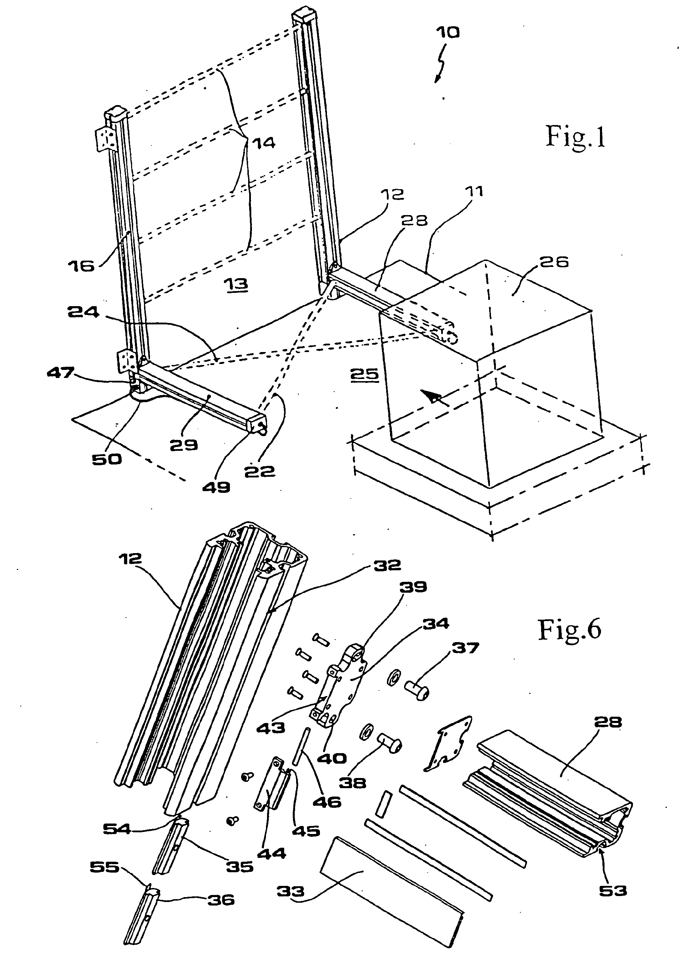

Both brackets of Fig. 1 project towards unsafe area 25 (L-arrangement), so that the light emitters generate beams 22, 24 intercepting the path of a pallet 26 leaving the area. However, a T-arrangement can also be obtained by attaching another pair of emitter-holding bracket and receiver-holding bracket to columns 12, 16, as for brackets 28, 29, but projecting on the opposite side with respect to the unsafe area.

The lower end of each column 12, 16 is plugged by a cap 47 holding two connectors (one for each bracket attachable to the column) by which the muting sensors are connected to the processing unit and power supply. The free end of each bracket is also plugged by a cap 49 through which an electric cable 50 is inserted. Cable 50 is connected, inside the bracket, to muting emitters or receivers and, outside the bracket, to one of said connectors, by a connection end.

Preferably, cable 50 is housed in a groove 53 of the bracket, similar to groove 32 of the column. Groove 53 has inward-projecting edges 48a, 48b, and cable 50 is retained in it by an elongated plate 52 whose longitudinal margins are internally constrained by said edges 48a, 48b (Fig. 7).

It can be seen that the invention solves the stated problem, by providing a photoelectric barrier provided with muting sensors which has the same degree of safety of the known barriers, and whose sensors are adjustable for height and slope to match the requirements.

Another advantage of the invention is that traditional channels can be employed as emitter-holding bracket and receiver-holding bracket, without altering the accuracy of the barrier.

A further advantage of this invention is that sensors are completely isolated inside the bracket so that the barrier can also be used in humid environment.

As will be evident to the person skilled in the art, many changes can be made, without thereby abandoning the scope of the claims. For example, the groove along the column can be replaced by an external, rectilinear guide, a connection member attached to the bracket being slidable along such guide and lockable at a desired position.

## Claims

1. A column for a photoelectric barrier having muting sensors, provided, along at least one of its lateral surfaces, with a longitudinal groove (32) having inwardly projecting edges (31a, 31b), and supporting at least one overhanging bracket (28, 29) by means of a connection member (34-38) which is slidable along said groove (32) extending along said column (12, 16), and is fastenable at a desired position, said connection member (34-38) comprising a plate (34) attached at one end of said bracket (28, 29) and at least one retaining insert (35, 36), which engages said groove (32) and is connected to the plate (34) by two screws (37, 38) engaging respective slots (39, 40) in the plate (34), said inwardly projecting edges (31a, 31b) being clamped between the plate and the retaining insert at the desired position of the plate along the groove (32), **characterized in that** the column is shaped as a U-channel, **in that** the bracket (28, 29) holds muting emitters and/or receivers for the electric barrier, and **in that** one of said slots (39) is elongated and curved.

2. The column of claim 1, **characterized in that** one of said slots (39) is elongated and curved transversely to the column, whereby the rotation angle of the bracket (28, 29) about the axis of the screw (38) engaging the other one (40) of said slots is adjustable.

3. The column of claim 1 or 2, **characterized in that** said plate (34) has a peripheral recess (43) housing the end portion of a semitransparent optical window (33), a tongue (44) provided with a gasket (46) and attached at the edge of said plate being externally pushed against said end portion of the semitransparent optical window.

4. The column of anyone of claims 1 to 3, **characterized in that** the lower end of at least one of said columns (12, 16) is plugged by a cap (47) holding at least one connector, through which said muting emitters and receivers are connected to a processing unit inside the column and to a power supply.

5. The column of anyone of claims 1 to 4, **characterized in that** the free end of the bracket (28, 29) is plugged by a cap (49) traversed by an electric cable (50) that is connected, inside the bracket, to respective muting emitters or receivers and, outside the bracket, to one of said connectors by a connection end.

6. The column of anyone of claims 1 to 5, said bracket (28, 29) being a U-channel provided with a longitudinal groove (53) extending along at least one of its lateral surfaces and having inwardly projecting edges, **characterized in that** said electric cable (50) is received in said groove (53) of the bracket and is retained in it by an elongated plate (52) whose longitudinal margins are internally constrained by said edges.

## Patentansprüche

1. Säule für ein deaktivierende Sensoren aufweisendes photoelektrisches Gitter, die entlang wenigstens einer ihrer seitlichen Oberflächen mit einer Längsnut (32) versehen ist, die nach innen ragenden Kanten (31a, 31b) besitzt und die wenigstens eine hervorstehende Halterung (28, 29) mittels eines Verbindungsglieds (34-38) trägt, das entlang der Nut (32), die sich entlang der Säule (12, 16) erstreckt, gleitend beweglich ist und das an einer gewünschten Position befestigbar ist, wobei das Verbindungsglied (34-38) eine Platte (34), die an einem Ende der Halterung (28, 29) befestigt ist, und wenigstens einen Rückhalteeinsatz (35, 36), der in die Nut (32) eingreift und mit der Platte mittels zweier Schrauben (37, 38), die in entsprechende Schlitze (39, 40) in der Platte (34) eingreifen, umfasst, wobei die nach innen ragenden Kanten (31a, 31b) zwischen der Platte und dem Rückhalteeinsatz an der gewünschten Position der Platte entlang der Nut (32) eingeklemmt sind, **dadurch gekennzeichnet, dass** die Säule als U-Kanal geformt ist, dass die Halterung (28, 29) deraktivierende Emitter und/oder Empfänger für das elektrische Gitter hält und dass einer der Schlitze (39) ein Längsschlitz und gekrümmt ist.

2. Säule nach Anspruch 1, **dadurch gekennzeichnet, dass** einer der Schlitze (39) ein Längsschlitz und schräg zur Säule gekrümmt ist, wodurch der Drehwinkel der Halterung (28, 29) um die Achse der Schraube (38), die in den anderen (40) Schlitz eingreift, einstellbar ist.

3. Säule nach Anspruch 1 oder 2, **dadurch gekennzeichnet, dass** die Platte (34) außen einen Einschnitt (43) besitzt, der den Endabschnitt eines halbtransparenten optischen Fensters (33) aufnimmt, wobei eine Zunge (44), die mit einer Dichtung (46) versehen ist und an der Kante der Platte befestigt ist, von außen gegen den Endabschnitt des halbtransparenten optischen Fensters gedrückt wird.

4. Säule nach einem der Ansprüche 1 bis 3, **dadurch gekennzeichnet, dass** das untere Ende wenigstens einer der Säulen (12, 16) mittels einer Kappe (47) verschlossen ist, die wenigstens ein Verbindungselement hält, durch welches die deaktivierenden Emitter und Empfänger an eine Verarbeitungseinheit innerhalb der Säule und an eine Stromversorgung angeschlossen sind.

5. Säule nach einem der Ansprüche 1 bis 4, **dadurch gekennzeichnet, dass** das freie Ende der Halterung (28, 29) mittels einer Kappe (49) verschlossen ist, die von einem elektrischen Kabel (50) durchsetzt wird, das innerhalb der Halterung mit entsprechenden deaktivierenden Emittern oder Empfängern verbunden ist und außerhalb der Halterung mittels eines Verbindungsendes mit einem der Verbindungselemente.

6. Säule nach einem der Ansprüche 1 bis 5, wobei die Halterung (28, 29) ein U-Kanal ist, der mit einer sich entlang wenigstens einer seiner seitlichen Oberflächen erstreckenden und nach innen ragende Kanten aufweisenden Längsnut (53) versehen ist, **dadurch gekennzeichnet, dass** das elektrische Kabel (50) in der Nut (53) der Halterung aufgenommen ist und innerhalb derselben mittels einer Langplatte (52) zurückgehalten ist, deren Längsbegrenzungen zwischen den Kanten eingezwängt sind.

## Revendications

1. Colonne pour une barrière lumineuse ayant des capteurs désactivables, munie, le long d'au moins une de ses surfaces latérales, d'une rainure longitudinale (32) ayant des bords en saillie vers l'intérieur (31a, 31b), et supportant au moins une console (28, 29) en surplomb au moyen d'un élément de raccordement (34-38) qui peut coulisser le long de ladite rainure (32) s'étendant le long de ladite colonne (12, 16), et peut être fixée à une position souhaitée, ledit élément de raccordement (34-38) comprenant une plaque (34) fixée à une extrémité de ladite console (28, 29) et au moins un insert de retenue (35, 36), qui vient en prise avec ladite rainure (32) et est raccordé à la plaque (34) par deux vis (37, 38) venant en prise avec des fentes respectives (39, 40) dans la plaque (34), lesdits bords en saillie vers l'intérieur (31a, 31b) étant serrés entre la plaque et l'insert de retenue à la position souhaitée de la plaque le long de la rainure (32), **caractérisée en ce que** la colonne est conformée comme un canal en U, **en ce que** la console (28, 29) supporte des émetteurs et/ou récepteurs désactivables pour la barrière électrique, et **en ce qu'**une desdites fentes (39) est allongée et incurvée.

2. Colonne selon la revendication 1, **caractérisée en ce qu'**une desdites fentes (39) est allongée et incurvée transversalement par rapport à la colonne, l'angle de rotation de la console (28, 29) autour de l'axe de la vis (38) venant en prise avec l'autre (40) desdites fentes étant réglable.

3. Colonne selon la revendication 1 ou 2, **caractérisée en ce que** ladite plaque (34) a un évidement périphérique (43), logeant la partie d'extrémité d'une fenêtre optique semi-transparente (33), une languette (44) munie d'une garniture d'étanchéité (46) et fixée au bord de ladite plaque étant poussée vers l'extérieur contre ladite partie d'extrémité de la fenêtre optique semi-transparente.

4. Colonne selon l'une quelconque des revendications 1 à 3, **caractérisée en ce que** l'extrémité inférieure d'au moins une desdites colonnes (12, 16) est fermée par un couvercle (47) supportant au moins un connecteur, par l'intermédiaire duquel lesdits émetteurs et récepteurs désactivables sont raccordés à une unité centrale à l'intérieur de la colonne et à une alimentation électrique.

5. Colonne selon l'une quelconque des revendications 1 à 4, **caractérisée en ce que** l'extrémité libre de la console (28, 29) est fermée par un couvercle (49) traversé par un câble électrique (50) qui est raccordé, à l'intérieur de la console, aux émetteurs et récepteurs désactivables respectifs et, à l'extérieur de la console, à un desdits connecteurs par une extrémité de raccordement.

6. Colonne selon l'une quelconque des revendications 1 à 5, ladite console (28, 29) étant un canal en U muni d'une rainure longitudinale (53) s'étendant le long d'au moins une de ses surfaces latérales et ayant des bords en saillie vers l'intérieur, **caractérisée en ce que** ledit câble électrique (50) est reçu dans ladite rainure (53) de la console et est retenu dans celle-ci par une plaque allongée (52) dont les marges longitudinales sont limitées de manière interne par lesdits bords.
